Europäisches Patentamt

European Patent Office

Office européen des brevets

(19)

(11) **EP 0 996 875 B1**

(12) **EUROPÄISCHE PATENTSCHRIFT**

(45) Veröffentlichungstag und Bekanntmachung des Hinweises auf die Patenterteilung:
**09.10.2002 Patentblatt 2002/41**

(51) Int Cl.$^7$: **G05B 13/04**

(21) Anmeldenummer: **98941266.3**

(22) Anmeldetag: **03.07.1998**

(86) Internationale Anmeldenummer:
**PCT/DE98/01848**

(87) Internationale Veröffentlichungsnummer:
**WO 99/003024 (21.01.1999 Gazette 1999/03)**

(54) **VERFAHREN ZUR EINSTELLUNG MEHRERER REGLER ZUR REGELUNG EINES AUS GEKOPPELTEN REGELSTRECKEN BESTEHENDEN REGELSTRECKENSYSTEMS**

METHOD FOR ADJUSTING SEVERAL CONTROLLERS USED TO CONTROL A CONTROLLED SYSTEM CONSISTING OF COUPLED CONTROLLED MEMBERS

PROCEDE DE REGLAGE DE PLUSIEURS REGULATEURS POUR LA REGULATION D'UN SYSTEME D'AUTOMATISME ASSERVI CONSTITUE DE SYSTEMES REGLES COUPLES

(84) Benannte Vertragsstaaten:
**AT CH DE ES FR GB LI**

(30) Priorität: **10.07.1997 DE 19729632**

(43) Veröffentlichungstag der Anmeldung:
**03.05.2000 Patentblatt 2000/18**

(73) Patentinhaber: **SIEMENS AKTIENGESELLSCHAFT**
**80333 München (DE)**

(72) Erfinder:
• **WEINZIERL, Klaus**
**D-81671 München (DE)**
• **KIRCHBERG, Karl-Heinz**
**D-76149 Karlsruhe (DE)**

(56) Entgegenhaltungen:
**US-A- 5 335 164        US-A- 5 610 843**

• **H. UNBEHAUEN: "Regelungstechnik III" 1993 , FRIEDRICH VIEWEG & SOHN VERLAGSGESELLSCHAFT , BRAUNSCHWEIG/WIESBADEN XP002091595 siehe Seite 118 - Seite 132**
• **O. FÖLLINGER: "Regelungstechnik" 1992 , HÜTHIG BUCH VERLAG , HEIDELBERG XP002091596 siehe Seite 365 - Seite 378**

## Beschreibung

Die Erfindung betrifft ein Verfahren zur Einstellung mehrerer Regler zur Regelung eines aus gekoppelten Regelstrecken bestehenden Regelstreckensystems.

Der nächste Stand der Technik geht aus dem Fachbuch von H. UNBEHAUEN: "Regelungstechnik III", Kapitel 4.6 "Parameterschätzungen bei linearen Mehrgrößensystemen", Seiten 118-132 hervor. Daraus sind in etwa die Verfahrensschritte (a) - (d) von Anspruch 1 bekannt. Aus der Druckschrift US 5,335,164 ist eine rekursive Methode zur Parameterbestimmung bekannt.

Bei Regelsystemen ohne Entkopplungsfilter, wie sie in der Praxis oft zu finden sind, wird bei manueller Inbetriebnahme vereinfachend von unabhängigen Regelstrecken ausgegangen. Bestehende Kopplungen zwischen Regelstrecken sind meist nicht klar zu erkennen oder werden häufig vernachlässigt. Existieren jedoch in der Anwendung derartige Kopplungen zwischen Regelstrecken, so impliziert die Inbetriebnahme oder Nachjustierung einer Regelstrecke Wirkungen auf andere Regelstrecken in dem Regelsystem.

Die manuelle Einstellung vollzieht sich somit in mehreren Schritten, wobei Parameter eines Reglers verändert werden, um z.B. bei Einstellung eines neuen Sollwertes eine Sollwertdifferenz rasch auszugleichen. Nach Einstellung des Reglers für diese Regelstrecke wird bei gekoppelten Regelstrecken eine Verschlechterung des Regelverhaltens erwartet, d.h. bei den gekoppelten Regelstrecken wird, z.B. bei Einstellung eines neuen Sollwerts die Sollwertdifferenz langsam ausgeregelt. Zudem kann bei den Regelkreisen ein Überschwingen auftreten. Somit müssen bei den gekoppelten Regelstrecken die Reglerparameter nachjustiert werden, damit die Regelkreise zufriedenstellend arbeiten. Dabei ist ersichtlich, daß jede Verstellung der Reglerparameter bei einer Regelstrecke eine Veränderung der Regelkreise bei den Regelstrecken, die eine (unterschiedliche starke) Kopplung zu der verstellten Regelstrecke besitzen, bewirkt. Enthält ein Regelstreckensystem viele Regelstrecken, ist die Inbetriebnahme ein langwieriger und mühsamer Prozeß, da vor jeder Veränderung der stationäre Zustand des gesamten Regelstreckensystems abgewartet werden muß und bereits eingestellte Regelkreise mit fortschreitender Inbetriebnahme durch Veränderungen anderer Regler wieder verstellt werden.

Die Aufgabe der Erfindung besteht darin, in einem Regelstreckensystem, bestehend aus mehreren Regelstrecken, eine Einstellung der Regler vorzunehmen, wobei lediglich Meßwerte für das Einschwingen der Strecken verwendet werden, um die Parameter der Regler auf einmal einstellen zu können.

Diese Aufgabe wird gemäß den Merkmalen des Patentanspruchs 1 gelöst.

Mit dem erfindungsgemäßen Verfahren werden in einem Regelstreckensystem aus mehreren Regelstrecken für jeden Regler die jeweiligen Reglerparameter berechnet, wobei die Meßwerte für das Einschwingen des Regelstreckensystems notwendig sind, um automatisch auf alle Reglerparameter zu schließen. Die Inbetriebnahme bspw. eines Ofens, der aus mehreren Heizzonen besteht, vollzieht sich somit in einem Schritt, da die manuelle Iteration entfällt, da sie automatisch auf dem Rechner durchgeführt wird. Dies ist möglich, weil in dem erfindungsgemäßen Verfahren die Kopplungen mitberücksichtigt werden und nicht, wie bei der manuellen Einstellung, nur basierend auf dem Verhalten einer Regelstrecke die Reglerparameter verändert werden. Dabei ergibt sich vorteilhaft eine erheblich Zeitersparnis, weil die erforderlichen Iterationen zur Optimierung der Regler im Rechner ausgeführt werden. So können Einschwingvorgänge von Temperaturregelstrecken wesentlich schneller auf einem Rechner simuliert werden.

Ein weiterer Vorteil besteht darin, daß Reglereinstellungen reproduzierbar sind und damit weniger von der Erfahrung des Einstellers abhängen.

Generell ist die automatische Optimierung wirtschaftlicher als die beschriebene manuelle Iteration, da nicht unnötig Energie und Material verbraucht wird.

Die automatisch ermittelten Reglereinstellungen liegen dicht an einem möglichen Optimum, was einen wirtschaftlichen Betrieb der Anlage ermöglicht.

Ferner wird durch das automatische Entwurfsverfahren eine "Referenz" geliefert, die zur Beurteilung eines Optimierungspotentials einer komplexen Anlage verwendet werden kann.

Schließlich ist es ein Vorteil der Erfindung, daß bei der automatischen Reglereinstellung auch das Störverhalten berücksichtigt wird, wohingegen manuelle Reglereinstellungen häufig nur für das Führungsverhalten vorgenommen werden.

Weiterhin ist es möglich, die Anzahl der erforderlichen Iterationen auf dem Rechner durch den Einsatz moderner numerischer Verfahren zu reduzieren.

Für jeden Regler wird eine Übertragungsfunktion ermittelt, d.h. ein PID-Regler verfügt über die für ihn typischen Reglerparameter "proportionaler Anteil P", "integrierender Anteil I" und "differenzierender Anteil D". In der Regelungstechnik ist die entsprechende Übertragungsfunktion für unterschiedliche Typen von Reglern, üblicherweise in frequenzabhängiger Darstellung mit Laplace-Operator $s=j\omega$, dem Fachmann hinreichend bekannt.

Wie erwähnt, werden Messungen an dem Regelstreckensystem durchgeführt, wobei für jede zu berücksichtigende Regelstrecke ein Einschwingverhalten aufgezeichnet wird.

Somit hat man das Einschwingverhalten jeder Regelstrecke in dem Regelstreckensystem und kennt den Typ des Reglers. Es wird nun eine Ersatzstrecke berechnet, die Kopplungen der jeweiligen Regelstrecke mit anderen Regelstrecken berücksichtigt.

Mit Kenntnis dieser Ersatzstrecke ist es möglich, in iterativen Schritten die Reglerparameter für jeden Regler eines jeden Regelkreises zu berechnen, wobei für jede Regelstrecke eine eigene Darstellung der Reglerparameter in Abhängigkeit von anderen Reglerparametern existiert und durch den Rechner jeweils für jeden Regelkreis mit den schon errechneten anderen Reglerparametern der gekoppelten Regelstrecken iterativ die eigenen Reglerparameter ermittelt werden, die in die anderen Gleichungen, die eine Kopplung zu der Regelstrecke aufweisen, einfließen. In einem nächsten Schritt werden die Reglerparameter des nächsten Reglers optimiert usf.

Eine Weiterbildung der Erfindung besteht darin, die Reglerparameter für den jeweiligen Regler eines Regelkreises zu berechnen, indem eine Nullstellensuche einer in impliziter Form vorliegenden Darstellung, die die Übertragungsfunktion aller Regler, Strecken und Kopplungen enthält, durchgeführt wird, wobei weiterhin dabei ein iteratives Newton-Verfahren angewandt werden kann.

Eine andere Weiterbildung der Erfindung besteht darin, die Einstellung der mehreren Regler des Regelstreckensystems mittels nichtlinearer Reglerparametrierverfahren, vorzugsweise mittels eines neuronalen Netzes durchzuführen (neuronales Reglerparametrierverfahren).

Eine Anwendung des erfindungsgemäßen Verfahrens ist eine Inbetriebnahme eines aus mehreren Heizzonen bestehenden Ofens, bspw. zur Ziegelbrennung, bei dem feste Anforderungen an den Temperaturverlauf innerhalb des Ofens bestehen.

Andere Anwendungen der Erfindung sind kombinierte Druck-/Durchflußregelungen in Versorgungsleitungen oder Temperatur-/Feuchtregelungen in Klimaanlagen.

Eine Weiterbildung der Erfindung besteht in der Verwendung eines Regelstreckensystems, das aus mindestens zwei Regelstrecken besteht und mit mindestens zwei Reglern geregelt wird.

Weiterbildungen der Erfindung ergeben sich aus den abhängigen Ansprüchen.

Anhand der folgenden Figuren werden Ausführungsbeispiele der Erfindung näher dargestellt.

Es zeigen

Fig.1  eine Skizze, die ein Regelstreckensystem mit zwei Stellgrößen und zwei Regelgrößen darstellt,

Fig.2  eine Skizze, die ein Regelstreckensystem mit zwei Reglern und ohne ein Entkopplungsfilter darstellt,

Fig.3  eine Skizze, die die Situation vor Inbetriebnahme des zweiten Regelkreises veranschaulicht,

Fig.4  eine Skizze, die eine allgemeine Abhängigkeit einer Regelstrecke von mehreren gekoppelten Regelstrecken zeigt,

Fig.5  ein Blockdiagramm, das Schritte eines Verfahrens zur Reglereinstellung darstellt.

Nachfolgend ist die Erfindung anhand eines Regelstreckensystems mit zwei Regelstrecken, also mit 2 Eingängen und 2 Ausgängen erläutert, wobei im Anschluß an die Erklärungen die Erweiterung für den Fall mehrerer Eingänge und Ausgänge beschrieben ist.

BESCHREIBUNG UND IDENTIFIKATION EINES MEHRGRÖßENSYSTEMS

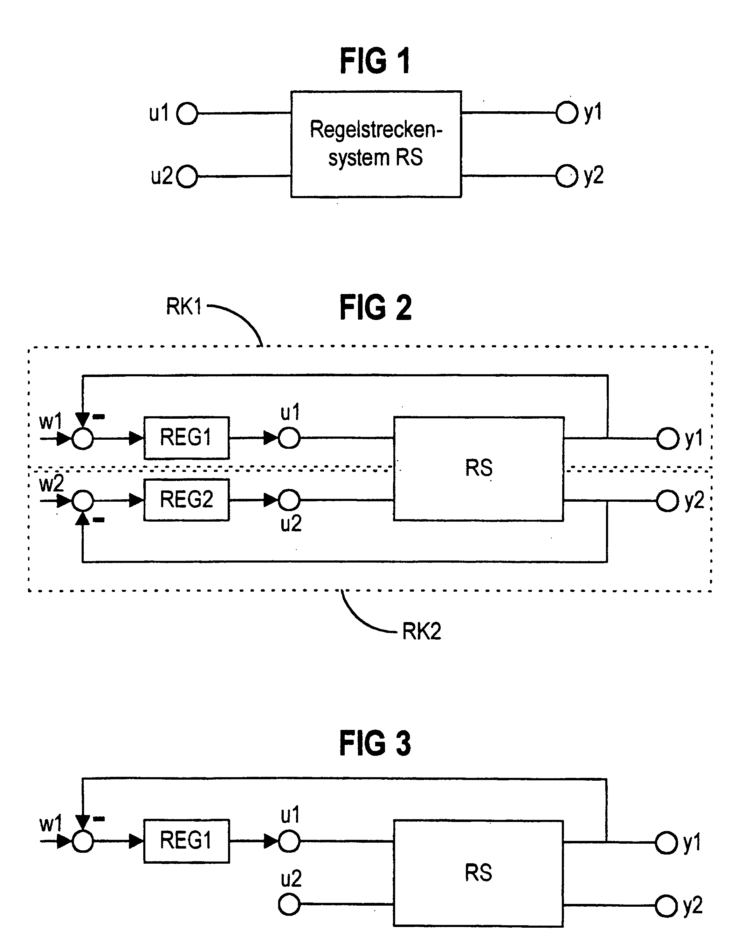

In Fig.1 ist ein Regelstreckensystem RS mit zwei Stellgrößen $u_1$ und $u_2$ und zwei Regelgrößen $y_1$ und $y_2$ dargestellt.

Als Beispiel hierfür diene ein Wasserhahn mit einem Warmwasserrad und einem Kaltwasserrad. Die Größe $u_1$ bzw. $u_2$ charakterisiert jeweils die Stellung des Warm- bzw. des Kaltwasserrads. Die Regelgrößen $y_1$ und $y_2$ bedeuten die Wassertemperatur und den Volumenstrom des Wassers (Wasserfluß).

Anwendungsmöglichkeiten sind Regelkreise für Druck und Temperatur eines Kessels, eine Dampfturbine, ein Ofen mit mehreren Heizzonen, z.B. zum Brennen von Ziegeln, Lufttemperatur und Luftfeuchtigkeit bei Klimaregelungen.

Bei einer linearen zeitinvarianten Mehrgrößenstrecke mit zwei Stellgrößen und zwei Regelgrößen gilt im Frequenzbereich

$$\begin{bmatrix} Y_1(s) \\ Y_2(s) \end{bmatrix} = \begin{bmatrix} H_{11}(s) & H_{12}(s) \\ H_{21}(s) & H_{22}(s) \end{bmatrix} \cdot \begin{bmatrix} U_1(s) \\ U_2(s) \end{bmatrix} \tag{1},$$

wobei

s           die Laplace-Variable ($s = j\omega$),

$Y_i(s)$, $U_i(s)$     die Laplace-Transformierten von $y_i$ und $u_i$ ($i=1,2$),

$H_{11}$, $H_{22}$     Teilübertragungsfunktionen der Diagonalen (Hauptstrecken, Hauptzweige),

$H_{12}$, $H_{21}$     Teilübertragungsfunktionen der Nebendiagonalen (Kopplungen)

bezeichnen.

Die Teilübertragungsfunktionen erhält man durch Auswerten von Gleichung (1) jeweils für $U_1(s)$ bzw. für $U_2(s)$, also

$$H_{11}(s) \;=\; \left.\frac{Y_1(s)}{U_1(s)}\right|_{U_2(s)\equiv 0}\;,$$

$$H_{12}(s) \;=\; \left.\frac{Y_1(s)}{U_2(s)}\right|_{U_1(s)\equiv 0}\;,$$

$$H_{21}(s) \;=\; \left.\frac{Y_2(s)}{U_1(s)}\right|_{U_2(s)\equiv 0}$$

und

$$H_{22}(s) \;=\; \left.\frac{Y_2(s)}{U_2(s)}\right|_{U_1(s)\equiv 0}\;.$$

Eine Messung der Streckenfrequenzgänge für $s = j\omega$ an einer gegebenen Anwendung erfolgt dadurch, daß zunächst die Stellgröße $u_1$ verstellt und die Stellgröße $u_2$ beibehalten wird. Es werden beide Anwortsignale $y_1$ und $y_2$ aufgezeichnet. Daraufhin wird die Stellgröße $u_1$ beibehalten und die Stellgröße $u_2$ verstellt. Wieder werden die Anwortsignale $y_1$ und $y_2$ aufgezeichnet. Insgesamt erhält man demnach vier Antwortsignale auf vier Eingangssignale zu den vier Teilübertragungsfunktionen $H_{11}(s)$, $H_{12}(s)$, $H_{21}(s)$ und $H_{22}(s)$ in der angegebenen Reihenfolge.

## DEZENTRALER ENTWURF OHNE ENTKOPPLUNGSFILTER

In Fig.2 ist die Struktur eines Regelstreckensystems RS ohne Entkopplungsfilter mit einem Regler1 REG1, einem Regler2 REG2, zwei Führungsgrößen $w_1$ und $w_2$ und zwei Regelkreisen RK1 und RK2 dargestellt. Diese Regelungsstruktur wird in der Praxis häufig verwendet, da bei der Inbetriebnahme oft davon ausgegangen wird, daß zwei unabhängige Regelstrecken, also die beiden Hauptstrecken mit den Übertragungsfunktionen $H_{11}(s)$ und $H_{22}(s)$, vorliegen. Bestehende Kopplungen mit den Übertragungsfunktionen $H_{12}(s)$ und $H_{21}(s)$sind häufig nicht klar zu erkennen oder werden häufig einfach vernachlässigt. In vielen Fällen wird diese Regelungsstruktur gewählt, weil der Entwurf, die Inbetriebnahme und die Wartung von vorgeschalteten Entkopplungsfiltern aufwendig ist. Dies ist beispielsweise der Fall, wenn sich Kopplungen durch Umbauten, Einsatz anderer Betriebsmittel (Katalysatoren) oder schwankende Produktmengen häufig ändern oder wenn in einer vorhandenen Automatisierung ein Einbau von Entkopplungsfiltern technisch nicht möglich ist. Dies ist dann der Fall, wenn bei einer Anlage aus Kostengründen preiswerte Einzelregler eingesetzt wurden oder wenn die betroffenen Prozeßgrößen in Anlagenteilen liegen, die mit getrennten Systemen geregelt werden.

Auf die Probleme bei der Inbetriebnahme eines Regelstreckensystems ohne Entkopplungsfilter wird nachstehend näher eingegangen. Dazu wird angenommen, daß der Regelkreis RK1 für die erste Hauptstrecke bereits geschlossen wurde, und die Inbetriebnahme des zweiten Regelkreises erfolgen soll (siehe auch Fig.3). Wichtig für die Inbetriebnahme des zweiten Regelkreises RK2 ist die Übertragungsfunktion der Ersatzstrecke $H_{20}(s)$, wobei

$$H_{20}(s) = \frac{Y_2(s)}{U_2(s)},$$

die nachfolgend ermittelt wird. Im Folgenden wird das Argument "(s)" aus Gründen der Übersichtlichkeit weggelassen.

Übertragungsfunktionen der beiden Regler REG1 und REG2 werden nachfolgend mit $H_{R1}$ und $H_{R2}$ bezeichnet. Die Führungsgröße $w_1$ ist für die Rechnung zu Null zu setzen. Aus Gleichung (1) folgt

$$\frac{Y_2}{U_2} = \frac{H_{21}U_1 + H_{22}U_2}{U_2} = H_{22} + H_{21}\frac{U_1}{U_2} \qquad (1a).$$

Die Größe $U_1$ ist aus dieser Gleichung (1a) zu eliminieren, d.h. durch $U_2$ auszudrücken. Es folgt zunächst

$$U_1 = -H_{R1}Y_1 = -H_{R1}[H_{11}U_1 + H_{12}U_2].$$

Durch Auflösen nach $U_1$,

$$U_1 + H_{R1}H_{11}U_1 = -H_{R1}H_{12}U_2,$$

$$U_1 = \frac{-H_{R1}H_{12}U_2}{1 + H_{R1}H_{11}},$$

und Einsetzen in Gleichung (1a) folgt

$$H_{20} = H_{22} - \frac{H_{12}H_{21}H_{R1}}{1 + H_{R1}H_{11}} \qquad (2).$$

Der Regler2 REG2, dargestellt durch seine Übertragungsfunktion $H_{R2}$, "sieht" bei der Inbetriebnahme also nicht die Hauptstrecke $H_{22}$, sondern die Ersatzstrecke $H_{20}$, die sich von $H_{22}$ bei nicht verschwindenden Kopplungen $H_{12}$ und $H_{21}$ unterscheidet und von der Einstellung des Reglersl REG1 abhängt.

Analog zu Gleichung (1) folgt für den Regler1 REG1 die Ersatzstrecke $H_{10}$, die von dem Regler2 REG2 abhängt, anstelle der Hauptstrecke $H_{11}$:

$$H_{10} = H_{11} - \frac{H_{12}H_{21}H_{R2}}{1 + H_{R2}H_{22}} \qquad (3).$$

Bei der Inbetriebnahme der Regelungsstruktur ergibt sich also folgende Schwierigkeit: Parametriert man bei offenem zweiten Regelkreis ($H_{R2}$=0) den Regler1 REG1 mit der Übertragungsfunktion $H_{R1}$, so wird dieser für die Hauptstrecke $H_{11}$ eingestellt, da mit $H_{R2}$ = 0 der hintere Term in Gleichung (3) entfällt.

Bei der anschließenden Parametrierung des Reglers2 REG2 liegt die Ersatzstrecke $H_{20}$ nach Gleichung (2) zugrunde. Schließt man den zweiten Regelkreis RK2, so wird das Verhalten des ersten Regelkreises RK1 verstimmt, da nicht länger $H_{R2}$ = 0 gilt. Der erste Regelkreis RK1 wird nachjustiert, was aufgrund der Änderung von $H_{R1}$ in Gleichung (2) wiederum zu einer Verstimmung des zweiten Regelkreises RK2 führt. Die Inbetriebnahme ist somit zeitaufwendig, da zum einen wiederholt nachjustiert wird und zum anderen stets der stationäre Zustand abzuwarten ist.

Die Erfindung ermöglicht eine Einstellung (Parametrierung) der Reglerparameter ohne die manuelle Wiederholung und ohne das jeweilige Warten auf den stationären Zustand. Als Basis wird ein Inbetriebnahmewerkzeug benötigt, bei welchem einer Regelstrecke ein Regler zugeordnet wird, wie durch die Operatorgleichung

$$H_R = \Im\{H\} \tag{4}$$

ausgedrückt wird. Diese Zuordnung kann durch ein neuronales Netz mit einer vorgeschalteten Datenvorverarbeitung erfolgen: In der Datenvorverarbeitung werden zunächst aus der gemessenen Übertragungsfunktion der Regelstrecke Kenngrößen gebildet, dann werden aus diesen-Kenngrößen vom neuronalen Netz die zugehörigen Reglerparameter ermittelt (neuronale Parametrierung).

Das Inbetriebnahmeverfahren approximiert danach bei ausreichender Anzahl an Iterationen im Grenzfall die Gleichungen

$$H_{R1} = \Im\{H_{10}\} \tag{5}$$

und

$$H_{R2} = \Im\{H_{20}\} \tag{6},$$

d.h. die beiden Regler werden jeweils für die Ersatzstrecken entworfen. Durch Einsetzen der Gleichung (3) und der Gleichung (2) in die Gleichungen (5) und (6) folgt:

$$H_{R1} = \Im\left\{H_{11} - \frac{H_{12}H_{21}H_{R2}}{1 + H_{R2}H_{22}}\right\}$$

und

$$H_{R2} = \Im\left\{H_{22} - \frac{H_{12}H_{21}H_{R1}}{1 + H_{R1}H_{11}}\right\},$$

d.h.

$$0 = \Im\left\{H_{11} - \frac{H_{12}H_{21}H_{R2}}{1 + H_{R2}H_{22}}\right\} - H_{R1} \tag{7}$$

und

$$0 = \Im\left\{H_{22} - \frac{H_{12}H_{21}H_{R1}}{1 + H_{R1}H_{11}}\right\} - H_{R2} \qquad (8).$$

Da $H_{11}$, $H_{12}$, $H_{21}$ und $H_{22}$ gegeben und $H_{R1}$ und $H_{R2}$ gesucht sind, wird deutlich, daß Gleichung (7) und Gleichung (8) nicht unabhängig voneinander zu lösen sind, sondern ein nichtlineares Gleichungssystem zur Bestimmung von $H_{R1}$ und $H_{R2}$ darstellen.

Werden sowohl als Regler1 REG1 als auch als Regler2 REG2 PID-Regler verwendet, so ergibt sich:

$$H_{R1}(s) = K_{P1}\left(\frac{1}{sT_{N1}} + 1 + \frac{sT_{V1}}{1 + sT_{V1} / V}\right) \qquad (9),$$

$$H_{R2}(s) = K_{P2}\left(\frac{1}{sT_{N2}} + 1 + \frac{sT_{V2}}{1 + sT_{V2} / V}\right) \qquad (10),$$

wobei $K_{P1}$, $K_{P2}$, $T_{N1}$, $T_{N2}$, $T_{V1}$, $T_{V2}$ Parameter der PID-Regler REG1 und REG2 darstellen (Index 1 bzw. 2 für die Nummer des Reglers). Ein Parameter V ist fest vorgegeben, wird also nicht optimiert. In dem hier angeführten Beispiel stellen die Gleichungen (7) und (8) ein nichtlineares Gleichungssystem mit 6 Gleichungen für 6 Unbekannte dar.

Zur Berechnung des Reglers $H_{R1}$ bei zunächst vorgegebenen Reglerkoeffizienten $K_{P2}$, $T_{N2}$, und $T_{V2}$ sind die nachstehenden Schritte erforderlich:

1. Berechnung des Reglerfrequenzgangs entsprechend Gleichung (10) in Abhängigkeit der Reglerparameter $K_{P2}$, $T_{N2}$, und $T_{V2}$,
2. Berechnung des Ersatzstreckenfrequengangs $H_{10}$ durch Einsetzen der Frequenzgänge $H_{R2}$ und der Strecke ($H_{11}$, $H_{12}$, $H_{21}$ und $H_{22}$) für s = jω in Gleichung (3),
3. Reglerberechnung basierend auf dem Frequenzgang $H_{10}(j\omega)$ der Ersatzstrecke (dieser Schritt ist formal mit Gleichung (5) erfaßt).

Diese genannten Schritte werden zu einem Unterprogramm zusammengefaßt. Die Schnittstelle des Unterprogramms wird formal beschrieben durch

$$\begin{bmatrix} K_{P1} \\ T_{N1} \\ T_{V1} \end{bmatrix} = F(H_{11}, H_{12}, H_{21}, H_{22}, K_{P2}, T_{N2}, T_{V2}).$$

Das Unterprogramm erklärt Gleichung (5) für den Fall einer Parametrierung von PID-Reglern. Ebenfalls kann dieses Unterprogramm zur Darstellung von Gleichung (6) verwendet werden, also

$$\begin{bmatrix} K_{P2} \\ T_{N2} \\ T_{V2} \end{bmatrix} = F(H_{22}, H_{21}, H_{12}, H_{11}, K_{P1}, T_{N1}, T_{V1}).$$

Weiterhin läßt sich eine komprimierte Darstellung angeben, also

$$
\begin{bmatrix} K_{P1} \\ T_{N1} \\ T_{V1} \\ K_{P2} \\ T_{N2} \\ T_{V2} \end{bmatrix} = \begin{bmatrix} F(H_{11}, H_{12}, H_{21}, H_{22}, K_{P2}, T_{N2}, T_{V2}) \\ F(H_{22}, H_{21}, H_{12}, H_{11}, K_{P1}, T_{N1}, T_{V1}) \end{bmatrix} \qquad (11).
$$

Dieses nichtlineare Gleichungssystem kann mit einem beliebigen Standardverfahren, z.B. mit einem Newton-Verfahren gelöst werden.

Die obigen Ausführungen lassen sich auf den Fall eines Regelstreckensystems mit n Eingängen und n Ausgängen verallgemeinern. Hierzu wird folgendes Gleichungssystem formuliert (wieder werden PID-Regler verwendet):

$$
\begin{bmatrix} K_{P1} \\ T_{N1} \\ T_{V1} \\ K_{P2} \\ T_{N2} \\ T_{V2} \\ \vdots \\ K_{Pn} \\ T_{Nn} \\ T_{Vn} \end{bmatrix} = \begin{bmatrix} F(H_{11}, H_{12}, \ldots, H_{nn}, K_{P2}, T_{N2}, T_{V2}, K_{P3}, T_{N3}, T_{V3}, \ldots, K_{Pn}, T_{Nn}, T_{Vn}) \\ F(H_{22}, H_{21}, \ldots, H_{nn}, K_{P1}, T_{N1}, T_{V1}, K_{P3}, T_{N3}, T_{V3}, \ldots, K_{Pn}, T_{Nn}, T_{Vn}) \\ \vdots \\ F(H_{nn}, H_{n2}, \ldots, H_{11}, K_{P2}, T_{N2}, T_{V2}, K_{P3}, T_{N3}, T_{V3}, \ldots, K_{P1}, T_{N1}, T_{V1}) \end{bmatrix} \qquad (12).
$$

Jede Zeile auf der rechten Seite von Gleichung (12) steht, wie im Fall des Regelstreckensystems mit 2 Eingängen und 2 Ausgängen für ein Unterprogramm, das mit unterschiedlichen Parameterwerten aufgerufen wird. Die Parameter einer k-ten Zeile ($1 \leq k \leq n$) erhält man aus der ersten Zeile, indem bei den Indizes "k" anstelle von "1" und "1" anstelle von "k" ohne Veränderung der Reihenfolge der Parameter geschrieben wird.

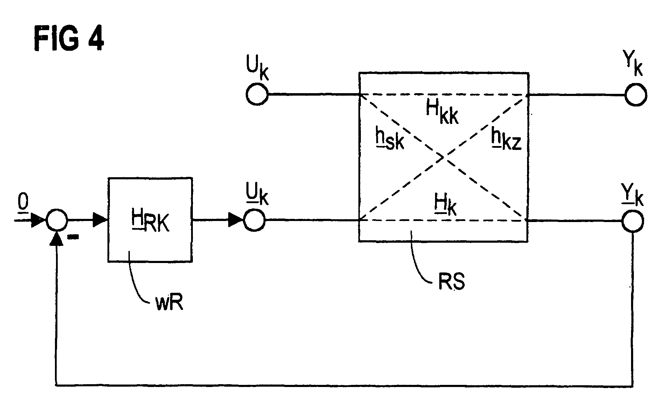

Nachfolgend wird anhand von Fig.4 die Ersatzstrecke $H_{k0}$ im allgemeinen Fall berechnet.

Gegeben ist eine verallgemeinerte Regelstrecke:

$$
\underline{Y} = \underline{H} \cdot \underline{U} \qquad (13)
$$

mit

$$
\underline{Y} = \begin{bmatrix} Y_1 \\ Y_2 \\ \vdots \\ Y_n \end{bmatrix} \quad \text{und} \quad \underline{U} = \begin{bmatrix} U_1 \\ U_2 \\ \vdots \\ U_n \end{bmatrix} \qquad (13a,b),
$$

und

$$\underline{\underline{H}} = \begin{bmatrix} H_{11} & H_{12} & \cdots & H_{1n} \\ H_{21} & H_{22} & \cdots & H_{2n} \\ \vdots & \vdots & \ddots & \vdots \\ H_{n1} & H_{n2} & \cdots & H_{nn} \end{bmatrix} \qquad (13c).$$

Gesucht ist die Übertragungsfunktion der Ersatzstrecke $H_{k0}$,

$$H_{k0} = \frac{Y_k}{U_k} \qquad (15),$$

das ist die Übertragungsfunktion, die sich bei geöffnetem k-ten Regelkreis und ansonsten geschlossenen Regelkreisen ergibt.

Dazu werden die folgenden Vektoren eingeführt (das hochgestellte 'T' deutet an, daß es sich um einen transponierten Vektor handelt):

$$\underline{Y}_k = [Y_1 \cdots Y_{k-1} \ Y_{k+1} \cdots Y_n]^T \qquad (16)$$

$$\underline{U}_k = [U_1 \cdots U_{k-1} \ U_{k+1} \cdots U_n]^T \qquad (17)$$

$$\underline{h}_{sk} = [H_{1k} \ H_{2k} \cdots H_{k-1,k} \ H_{k+1,k} \cdots H_{nk}]^T \qquad (18)$$

$$\underline{h}_{kz} = [H_{k1} \ H_{k2} \cdots H_{k,k-1} \ H_{k,k+1} \cdots H_{kn}] \qquad (19),$$

wobei

$\underline{Y}_k$      Ausgangssignale ohne $Y_k$,
$\underline{U}_k$      Stellsignale ohne $U_k$,
$\underline{h}_{sk}$      die k-te Spalte von $\underline{\underline{H}}$ ohne $H_{kk}$ und
$\underline{h}_{kz}$      die k-te Zeile von $\underline{\underline{H}}$ ohne $H_{kk}$

bezeichnen.

Ferner wird eine Rest-Matrix, ohne k-te Zeile und ohne k-te Spalte bestimmt:

$$\underline{\underline{H}}_k = \begin{bmatrix} H_{1,1} & H_{1,2} & \cdots & H_{1,k-1} & H_{1,k+1} & \cdots & H_{1,n} \\ \vdots & \vdots & \ddots & \vdots & \vdots & \ddots & \vdots \\ H_{k-1,1} & H_{k-1,2} & \cdots & H_{k-1,k-1} & H_{k-1,k+1} & \cdots & H_{k-1,n} \\ H_{k+1,1} & H_{k+1,2} & \cdots & H_{k+1,k-1} & H_{k+1,k+1} & \cdots & H_{k+1,n} \\ \vdots & \vdots & \ddots & \vdots & \vdots & \ddots & \vdots \\ H_{n,1} & H_{n,2} & \cdots & H_{n,k-1} & H_{n,k+1} & \cdots & H_{n,n} \end{bmatrix} \qquad (20).$$

Somit läßt sich schreiben:

$$Y_k = H_{k1}U_1 + H_{k2}U_2 + \ldots + H_{kn}U_n = H_{kk}U_k + \underline{h}_{kz}\underline{U}_k \qquad (21).$$

Dabei ist der Vektor $\underline{U}_k$ zu eliminieren. Dies gelingt, indem $\underline{U}_k$ über die Regler $\underline{Y}_k$ ausgedrückt wird, also mit

$$\underline{H}_{Rk} = \mathrm{diag}[H_{R,1}\ H_{R,2}\ \ldots\ H_{R,k-1}\ H_{R,k+1}\ \cdots\ H_{R,n}] \qquad (22)$$

gilt

$$\underline{U}_k = -\underline{H}_{Rk} \cdot \underline{Y}_k \qquad (23)$$

und mit

$$\underline{Y}_k = \underline{H}_k\underline{U}_k + \underline{h}_{sk}U_k \qquad (24)$$

folgt

$$\underline{U}_k = -\underline{H}_{Rk}\underline{H}_k\underline{U}_k - \underline{H}_{Rk}\underline{h}_{sk}U_k \Leftrightarrow$$

$$\Leftrightarrow (\underline{E} + \underline{H}_{Rk}\underline{H}_k)\underline{U}_k = -\underline{H}_{Rk}\underline{h}_{sk}U_k \Leftrightarrow$$

$$\Leftrightarrow \underline{U}_k = -(\underline{E} + \underline{H}_{Rk}\underline{H}_k)^{-1}\underline{H}_{Rk}\underline{h}_{sk}U_k \qquad (25)$$

Setzt man Gleichung (25) in Gleichung (21) ein, ergibt sich

$$Y_k = H_{kk}U_k - \underline{h}_{kz}(\underline{E} + \underline{H}_{Rk}\underline{H}_k)^{-1}\underline{H}_{Rk}\underline{h}_{sk}U_k \qquad (26).$$

Wird weiterhin Gleichung (15) für die gesuchte Ersatzstrecke mitberücksichtigt, so folgt

$$H_{k0} = H_{kk} - \underline{h}_{kz}(\underline{E} + \underline{H}_{Rk}\underline{H}_k)^{-1}\underline{H}_{Rk}\underline{h}_{sk} \qquad (27).$$

Für n=2 erhält man aus Gleichung (27) bei k=1 die Gleichung (3) und bei k=2 die Gleichung (2).
Für den Fall von n Reglern entstehen die Gleichungen:

$$k{=}1: \quad 0 = \Im\left\{H_{11} - \underline{h}_{1z}\left(\underline{E} + \underline{H}_{R1}\underline{H}_1\right)^{-1}\underline{H}_{R1}\underline{h}_{s1}\right\} - H_{R1}$$

$$k{=}2: \quad 0 = \Im\left\{H_{22} - \underline{h}_{2z}\left(\underline{E} + \underline{H}_{R2}\underline{H}_2\right)^{-1}\underline{H}_{R2}\underline{h}_{s2}\right\} - H_{R2} \qquad (28)$$

$$\cdots$$

$$k{=}n: \quad 0 = \Im\left\{H_{nn} - \underline{h}_{nz}\left(\underline{E} + \underline{H}_{Rn}\underline{H}_n\right)^{-1}\underline{H}_{Rn}\underline{h}_{sn}\right\} - H_{Rn}$$

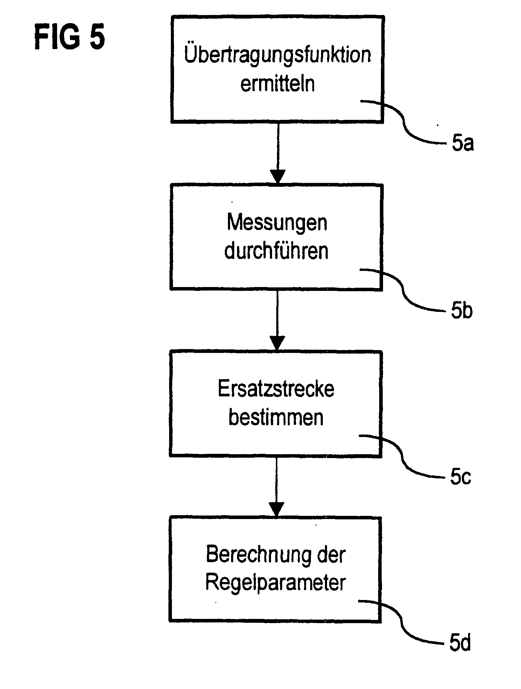

In Fig.5 sind die Schritte der Erfindung dargestellt. Im Schritt 5a werden die Übertragungsfunktionen der Regler in Abhängigkeit der Reglerparameter allgemein ermittelt (siehe Gleichungen (9) und (10)). Daraufhin werden im Schritt 5b Messungen der Antwortsignale für jede Regelstrecke einschließlich aller Kopplungen durchgeführt und eine Streckenübertragungsmatrix $\underline{H}$(s), siehe Gleichung (1). berechnet. Die Kopplungen zwischen den im Regelstreckensystem enthaltenen Regelstrecken werden in Form einer Ersatzstrecke für jeden Regelkreis in Schritt 5c berücksichtigt (siehe Gleichungen (2) und (3)). Schließlich werden aus den Ersatzfunktionen im Schritt 5d die Reglerparameter bestimmt für jeden Regler, indem iterativ das entstandene nichtlineare Gleichungssystem (siehe Gleichung (11)) gelöst wird. Dazu werden die einzelnen Gleichungen in eine Form zur Nullstellenberechnung gebracht (siehe Gleichung (11) nach Abziehen der rechten Seite), so daß in Form eines eigens dafür vorgesehenen Unterprogramms auf dem Rechner diese Nullstellenberechnung für variierende Reglerparameter durchgeführt wird. Das Ergebnis wird von dem Unterprogramm zurückgeliefert und stellt die Gesamtheit der gesuchten Reglerparameter dar.

## Patentansprüche

**1.** Verfahren zur Einstellung mehrerer Regler zur Regelung eines aus gekoppelten Regelstrecken bestehenden Regelstreckensystems,

> a) bei dem aus dem Typ eines jeweiligen Reglers eine Übertragungsfunktion ermittelt wird,
> b) bei dem für jeden Regelkreis Messungen von Stellsignalen und Ausgangssignalen des Regelstreckensystems durchgeführt werden,
> c) bei dem aus den Messungen Übertragungsfunktionen für die in dem Regelstreckensystem enthaltenen Regelstrecken und deren Kopplungen ermittelt werden,
> d) bei dem für jeden Regler eine Ersatzstrecke, die Kopplungen mit anderen Regelstrecken in dem Regelstreckensystem berücksichtigt, berechnet wird,
> e) bei dem iterativ bis zum Erreichen einer vorgebbaren Güte jeweils für jeden Regler eine Berechnung von Reglerparametern unter Berücksichtigung der Kopplungen mit den anderen Regelstrecken durchgeführt wird.

**2.** Verfahren nach Anspruch 1,
bei dem die Berechnung der Reglerparameter durchgeführt wird, indem mit einem iterativen Verfahren die mindestens eine Nullstelle eines mindestens eine Gleichung umfassenden Gleichungssystems, das die Kopplungen mit den anderen Regelstrecken berücksichtigt, ermittelt wird.

**3.** Verfahren nach Anspruch 1 oder 2,
bei dem das iterative Verfahren ein Standardverfahren zur Lösung von nichtlinearen Gleichungssystemen, insbesondere ein Newton-Verfahren, ist.

**4.** Verfahren nach einem der Ansprüche 1 bis 3,
bei dem nichtlineare Reglerparametrierverfahren, vorzugsweise ein neuronalen Reglerparametrierverfahren, eingesetzt wird.

**5.** Verfahren nach einem der vorhergehenden Ansprüche,
bei dem ein Ofen mit mehreren Heizzonen geregelt wird.

**6.** Verfahren nach einem der Ansprüche 1 bis 5, wobei zwei Regler mit zwei Stellgrößen und zwei Regelgrößen verwendet werden und ein zu lösendes Gleichungssystem in folgender Form vorliegt:

$$0 = \Im\left\{H_{11} - \frac{H_{12}H_{21}H_{R2}}{1 + H_{R2}H_{22}}\right\} - H_{R1}$$

und

$$0 = \Im\left\{H_{22} - \frac{H_{12}H_{21}H_{R1}}{1 + H_{R1}H_{11}}\right\} - H_{R2},$$

wobei

$\Im\{\}$    einen stetig differenzierbaren Operator,
$H_{ij}$    Übertragungsfunktionen der Regelstrecke (mit i,j = {1,2})
$H_{Ri}$    die Übertragungsfunktion des Reglers i

bezeichnen.

**7.** Verfahren nach einem der Ansprüche 1 bis 5,
bei dem N Regler mit N Stellgrößen und N Regelgrößen vorhanden sind und ein zu lösendes Gleichungssystem (N Gleichungen) in folgender Form vorliegt:

$$0 = \Im\left\{H_{11} - \underline{h}_{1z}\left(\underline{E} + \underline{H}_{R1}\underline{H}_1\right)^{-1}\underline{H}_{R1}\underline{h}_{s1}\right\} - H_{R1},$$

$$0 = \Im\left\{H_{22} - \underline{h}_{2z}\left(\underline{E} + \underline{H}_{R2}\underline{H}_2\right)^{-1}\underline{H}_{R2}\underline{h}_{s2}\right\} - H_{R2},$$

$$\cdots$$

$$0 = \Im\left\{H_{nn} - \underline{h}_{nz}\left(\underline{E} + \underline{H}_{Rn}\underline{H}_n\right)^{-1}\underline{H}_{Rn}\underline{h}_{sn}\right\} - H_{Rn},$$

wobei

$\Im\{\}$    einen stetig differenzierbaren Operator,
$H_{ij}$    Übertragungsfunktionen der Regelstrecke mit i,j = {1,2,...,n}
$H_{Ri}$    die Übertragungsfunktion des Reglers i,
$\underline{H}_{Rk}$    = diag[$H_{R,1}$ $H_{R,2}$ $\cdots$ $H_{R,k-1}$ $H_{R,k+1}$ $\cdots$ $H_{R,n}$] eine Diagonalmatrix mit Reglerübertragungsfunktionen ohne $H_{kk}$,
$\underline{h}_{sk}$    die k-te Spalte von $\underline{H}$ ohne $H_{kk}$,
$\underline{h}_{kz}$    die k-te Zeile von $\underline{H}$ ohne $H_{kk}$ und
$\underline{E}$    die Einheitsmatrix

bezeichnen.

**Claims**

**1.** Method for adjusting a plurality of controllers for controlling a controlled system consisting of coupled directly controlled members,

a) in which a transfer function is determined from the type of a respective controller,
b) in which measurements of actuating signals and output signals of the controlled system are carried out for each control loop,
c) in which transfer functions for the directly controlled members, contained in the controlled system, and their couplings are determined from the measurements,
d) in which an equivalent directly controlled member which takes account of coupling with other directly controlled members in the controlled system is calculated for each controller, and

e) in which a calculation of controller parameters is carried out respectively, taking account of the couplings with the other directly controlled members, for each controller in an iterative fashion until a prescribable quality is achieved.

2. Method according to Claim 1, in which the calculation of the controller parameters is carried out by using an iterative method to determine the at least one zero of a system of equations which comprises at least one equation and takes account of the couplings with the other directly controlled members.

3. Method according to Claim 1 or 2, in which the iterative method is a standard method for solving nonlinear systems of equations, in particular a Newton method.

4. Method according to one of Claims 1 to 3, in which nonlinear controller parameterization methods, preferably a neural controller parameterization method, are used.

5. Method according to one of the preceding claims, in which a furnace with a plurality of heating zones is controlled.

6. Method according to one of Claims 1 to 5, in which use is made of two controllers with two manipulated variables and two controlled variables, and a system of equations which is to be solved is present in the following form:

$$0 = \Im\left\{H_{11} - \frac{H_{12}H_{21}H_{R2}}{1 + H_{R2}H_{22}}\right\} - H_{R1}$$

and

$$0 = \Im\left\{H_{22} - \frac{H_{12}H_{21}H_{R1}}{1 + H_{R1}H_{11}}\right\} - H_{R2,}$$

where

$\Im\{\ \}$ denotes a continuously differential operator,

$H_{ij}$ denotes transfer functions of the directly controlled member (where i,j = {1,2}), and

$H_{Ri}$ denotes the transfer function of the controller i.

7. Method according to one of Claims 1 to 5, in which N controllers with N manipulated variables and N controlled variables are present, and a system of equations (N equation) which is to be solved is present in the following form:

$$0 = \Im\left\{H_{11} - \underline{h}_{1z}\left(\underline{E} + \underline{H}_{R1}\underline{H}_1\right)^{-1}\underline{H}_{R1}\underline{h}_{s1}\right\} - H_{R1,}$$

$$0 = \Im\left\{H_{22} - \underline{h}_{2z}\left(\underline{E} + \underline{H}_{R2}\underline{H}_2\right)^{-1}\underline{H}_{R2}\underline{h}_{s2}\right\} - H_{R2,}$$

$$\ldots$$

$$0 = \Im\left\{H_{nn} - \underline{h}_{nz}\left(\underline{E} + \underline{H}_{Rn}\underline{H}_n\right)^{-1}\underline{H}_{Rn}\underline{h}_{sn}\right\} - H_{Rn,}$$

where

$\Im${ } denotes a continuously differential operator,

$H_{ij}$ denotes transfer functions of the directly controlled member where i,j = {1,2}, and

$H_{Ri}$ denotes the transfer function of the controller i,

$\underline{H}_{Rk}$ diag[$H_{R,1}$ $H_{R,2}$ ··· $H_{R,k-1}$ $H_{R,k+1}$ ··· $H_{R,n}$] denotes the diagonal matrix with controller transfer functions without $H_{kk}$,

$\underline{h}_{sk}$ denotes the k-th column of $\underline{H}$ without $H_{kk}$,

$\underline{h}_{kz}$ denotes the k-th row of $\underline{H}$ without $H_{kk}$, and

$\underline{E}$ denotes the unit matrix.

**Revendications**

1. Procédé de réglage de plusieurs régulateurs pour la régulation d'un système d'automatisme asservi constitué de systèmes réglés couplés,

   a) dans lequel une fonction de transfert est déterminée à partir du type d'un régulateur respectif,
   b) dans lequel des mesures de signaux de commande et de signaux de sortie du système d'automatisme asservi sont réalisées pour chaque circuit de régulation,
   c) dans lequel des fonctions de transfert sont déterminées à partir des mesures pour les systèmes réglés couplés compris dans le système d'automatisme asservi et pour leurs couplages,
   d) dans lequel un système réglé de remplacement prenant en compte les couplages à d'autres systèmes réglés couplés dans le système d'automatisme asservi est calculé pour chaque régulateur,
   e) dans lequel un calcul de paramètres de régulateur est réalisé itérativement pour chaque régulateur, en tenant compte des couplages aux autres systèmes réglés et jusqu'à obtention d'un facteur pouvant être prédéfini.

2. Procédé selon la revendication 1, dans lequel le calcul des paramètres des régulateurs est réalisé en déterminant au moyen d'un procédé itératif le au moins un zéro d'un système d'équations comprenant au moins une équation, ce système d'équations tenant compte des couplages aux autres systèmes réglés.

3. Procédé selon la revendication 1 ou 2, dans lequel le procédé itératif est un procédé standard pour résoudre des systèmes d'équations non linéaires, notamment un procédé de Newton.

4. Procédé selon l'une des revendications 1 à 3, dans lequel des procédés de paramétrage de régulateurs non linéaires, de préférence un procédé de paramétrage de régulateurs non linéaire neuronal, est utilisé.

5. Procédé selon l'une des revendications précédentes, dans lequel un four à plusieurs zones de chauffage est régulé.

6. Procédé selon l'une des revendications 1 à 5, deux régulateurs ayant deux grandeurs réglantes et deux grandeurs réglées étant utilisés et un système d'équations à résoudre étant présent sous la forme suivante :

$$0 = \Im\left\{H_{11} - \frac{H_{12}H_{21}H_{R2}}{1 + H_{R2}H_{22}}\right\} - H_{R1}$$

et

$$0 = \Im\left\{H_{22} - \frac{H_{12}H_{21}H_{R1}}{1 + H_{R1}H_{11}}\right\} - H_{R2},$$

$\Im${ } désignant un opérateur continuellement différenciable

$H_{ij}$ désignant des fonctions de transfert du système réglé (avec i, j = {1, 2})

$H_{Ri}$ désignant la fonction de transfert du régulateur i.

7. Procédé selon l'une des revendications 1 à 5, dans lequel N régulateurs ayant N grandeurs réglantes et N grandeurs réglées sont disponibles et dans lequel on a un système d'équations à résoudre (N équations) sous la forme suivante :

$$0 = \Im\{H_{11} - \underline{h}_{1z} (\underline{E} + \underline{H}_{R1}\underline{H}_1)^{-1} \underline{H}_{R1}\underline{h}_{s1}\} \; - \; H_{R1},$$

$$0 = \Im\{H_{22} - \underline{h}_{2z} (\underline{E} + \underline{H}_{R2}\underline{H}_2)^{-1} \underline{H}_{R2}\underline{h}_{s2}\} \; - \; H_{R2},$$

$$...$$

$$0 = \Im\{H_{nn} - \underline{h}_{nz} (\underline{E} + \underline{H}_{Rn}\underline{H}_n)^{-1} \underline{H}_{Rn}\underline{h}_{sn}\} \; - \; H_{Rn},$$

$\Im\{\}$ désignant un opérateur continuellement différenciable

$H_{ij}$ désignant des fonctions de transfert du système réglé (avec i, j = {1, 2, ..., n}

$H_{Ri}$ désignant la fonction de transfert du régulateur i,

$\underline{H}_{Rk}$ = diag$[H_{R,1} \; H_{R,2} \; ... \; H_{R,k-1} \; H_{R,k+1} \; \cdots \; H_{R,n}]$ désignant une matrice diagonale ayant des fonctions de transfert de régulateur sans $H_{kk}$,

$\underline{h}_{sk}$ désignant la k-ième colonne de $\underline{H}$ sans $H_{kk}$,

$\underline{h}_{kz}$ désignant la k-ième ligne de $\underline{H}$ sans $H_{kk}$,

$\underline{E}$ désignant la matrice unitaire.

# FIG 1

# FIG 2

# FIG 3

# FIG 4

**FIG 5**

Übertragungsfunktion
ermitteln

⟋ 5a

Messungen
durchführen

⟋ 5b

Ersatzstrecke
bestimmen

⟋ 5c

Berechnung der
Regelparameter

⟋ 5d